# FASCICULE DE BREVET EUROPEEN

(11) **EP 1 089 021 B1**
(45) Date de publication et mention de la délivrance du brevet: **17.03.2004**
(21) Numéro de dépôt: 00402629.0
(22) Date de dépôt: 21.09.2000
(51) Int. Cl.: F16H 55/14

(54) **Volant de moteur thermique comprenant une couronne dentée de démarrage**
Schwungrad eines Verbrennungmotors mit Anlasser-Zahnkranzes
Flywheel of an internal combustion engine with a starting gear ring

(30) Priorité: 30.09.1999 FR 9912240; 21.12.1999 FR 9916175
(43) Date de publication de la demande: 04.04.2001
(73) Titulaire: S.A. Defontaine, 85530 La Bruffière (FR)
(72) Inventeur: Jaquemont, Eric, 44190 Clisson (FR); Douillard, Frank, 85610 La Bernardiere (FR); Rocheteau, Jean-Pierre, 85530 La Bruffiere (FR)
(74) Mandataire: Rémont, Claude

(56) Documents cités:
- DE-A- 3 132 503
- FR-A- 788 061
- US-A- 2 060 565
- US-A- 3 854 418
- US-A- 4 109 545
- US-A- 5 911 788
- PATENT ABSTRACTS OF JAPAN vol. 016, no. 169 (M-1239), 23 avril 1992 (1992-04-23) -& JP 04 015352 A (MAZDA MOTOR CORP), 20 janvier 1992 (1992-01-20)
- PATENT ABSTRACTS OF JAPAN vol. 1995, no. 08, 29 septembre 1995 (1995-09-29) -& JP 07 119600 A (NIPPONDENSO CO LTD), 9 mai 1995 (1995-05-09)
- PATENT ABSTRACTS OF JAPAN vol. 011, no. 360 (M-645), 25 novembre 1987 (1987-11-25) & JP 62 137443 A (YAMAHA MOTOR CO LTD), 20 juin 1987 (1987-06-20)
- PATENT ABSTRACTS OF JAPAN vol. 016, no. 262 (M-1265), 15 juin 1992 (1992-06-15) -& JP 04 063965 A (KUBOTA CORP), 28 février 1992 (1992-02-28)

## Description

La présente invention concerne un volant comprenant un support lié à l'arbre de sortie d'un moteur thermique et une couronne dentée de démarrage fixée sur le support, le support comportant une surface périphérique sensiblement cylindrique adaptée à recevoir la couronne, et la couronne comportant une surface périphérique intérieure sensiblement cylindrique complémentaire de la surface périphérique sensiblement cylindrique du support et étant adaptée à coopérer avec un rotor d'un démarreur dudit moteur thermique.

De manière classique, la couronne dentée de démarrage est fixée sur son support par frettage, vissage ou soudage, sans laisser aucun degré de liberté à la couronne, suivant une règle classique en matière d'engrenages.

Le support de la couronne de démarrage est en général le volant d'inertie, ou un élément faisant partie d'un ensemble faisant office de volant d'inertie, du moteur thermique, et tourne avec ce dernier.

Une couronne ainsi fixée sur son support présente une fiabilité satisfaisante. En effet, elle est capable de supporter et d'assurer un nombre de démarrages de l'ordre de 20 000 à 60 000, ce qui est en général suffisant compte-tenu de la durée de vie et des conditions moyennes d'utilisation d'un véhicule.

Toutefois, une opération de démarrage d'un moteur par entraînement de la couronne de démarrage et de son support par le rotor du démarreur génère du bruit dont le niveau global est supérieur à 90 décibels, que toutes les parties concernées, constructeurs et utilisateurs, souhaitent réduire notablement.

En outre, la lutte contre la pollution atmosphérique engendrée par le fonctionnement des moteurs thermiques risque d'imposer, à court ou à moyen terme, la pratique dite du "Stop and Go", qui consiste à arrêter le moteur du véhicule lorsque ce dernier est arrêté, soit en raison d'un feu de signalisation au rouge, soit en raison d'un embouteillage de la circulation.

Une telle pratique risque, pour des véhicules utilisés de manière intensive dans les villes, de multiplier par un facteur d'au moins quatre à six, le chiffre précité. Une couronne de démarrage devrait, dans un tel cas, supporter au moins 200 000, sinon 250 000 ou 300 000, démarrages, et peut-être beaucoup plus.

On connaît, d'après le FR-A-788.061, un volant du type précité dans lequel la couronne est montée à glissement sur une garniture annulaire en matière insonore fixée sur la surface périphérique cylindrique du support. La transmission des efforts entre la couronne et le support est assurée soit par une bague radiale en caoutchouc collée respectivement sur des faces radiales complémentaires de la couronne et du support, soit par des doigts en caoutchouc engagés dans des échancrures des surfaces périphériques cylindriques respectives du support et de la couronne.

Un tel volant, dans lequel l'ensemble de la couronne peut pivoter autour de son axe par rapport au support, ne permet pas d'améliorer la durée de vie des volants classiques précités et ne présente pas la fiabilité requise.

Le but de la présente invention est de remédier aux inconvénients des systèmes de liaison classiques connus et de proposer un volant du type précité dont la couronne soit capable de supporter un nombre de démarrages correspondant aux nouveaux chiffres indiqués ci-dessus, tout en réduisant notablement, si possible, le niveau de bruit actuel.

Suivant la présente invention, le volant du type précité est caractérisé en ce que :
- la surface périphérique sensiblement cylindrique complémentaire de la couronne est fixée sur au moins une partie de la superficie de la surface périphérique cylindrique du support d'une manière telle que la couronne peut se déformer légèrement radialement vers l'arbre de façon à diminuer les contraintes maximales s'exerçant sur la couronne pendant une opération de démarrage.

On donne ainsi à la couronne de démarrage, à l'encontre des règles de dessin des engrenages, une certaine flexibilité et une certaine possibilité de déformation radiale.

De façon tout à fait surprenante, on obtient ainsi un amortissement de l'effet de choc subi par les dents de la couronne soumises à la pression exercée par les dents du rotor du démarreur lors d'un démarrage.

Cet effet d'amortissement permet une augmentation spectaculaire de la durée de vie de la couronne de démarrage et de celle du pignon, cette durée de vie pouvant correspondre au minimum à environ 200 000 cycles de démarrages.

On observe également une diminution de l'ordre de 5 à 7 décibels du bruit engendré par le support et la couronne de démarrage au moment de l'engrènement du rotor du démarreur sur la couronne.

D'autres particularités et avantages de la présente invention apparaîtront dans la description détaillée ci-après.

Aux dessins annexés, donnés uniquement à titre d'exemples non limitatifs :
- la figure 1 est une vue schématique en élévation d'un volant d'inertie pour moteur thermique, comportant une couronne dentée de démarrage fixée sur une partie périphérique d'un support dudit volant, par un système de liaison selon un mode de réalisation de l'invention;
- les figures 2A, 2B et 2C sont des vues schématiques en coupe axiale d'un volant selon un mode de réalisation de la présente invention, la couronne étant respectivement frettée (figures 2A et 2B) et soudée (figure 2C) sur le support, la couronne et le support étant décalés axialement à la figure 2A pour la clarté de ladite figure 2A;
- les figures 3A et 3B sont des vues semblables respectivement aux figures 2A et 2C correspondant à un autre mode de réalisation de la présente invention;
- la figure 4 est une vue schématique, semblable à la figure 2C, d'un autre mode de réalisation de la présente invention;
- la figure 5 est une vue semblable à la figure 4 représentant un autre mode de réalisation de la présente invention;
- la figure 6 est une vue semblable à la figure 5 d'une variante du mode de réalisation représenté à ladite figure 5;
- la figure 7 est une vue semblable à la figure 5 d'une autre variante du mode de réalisation représenté à ladite figure 5;
- la figure 8 est une vue semblable à la figure 1 d'un autre mode de réalisation de la présente invention; et
- la figure 9 est une vue schématique très agrandie en coupe transversale, par exemple selon VII-VII à la figure 2C, d'une dent d'une couronne dentée fixée par un système de liaison selon un mode de réalisation de la présente invention.

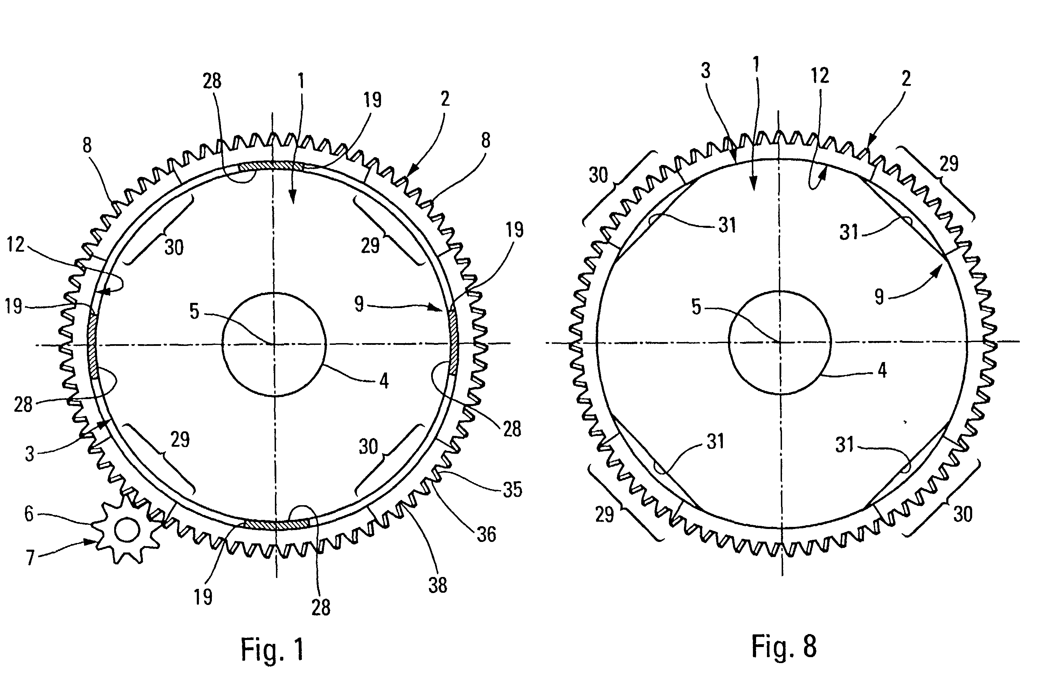

On a représenté schématiquement sur la figure 1, un volant d'inertie pour moteur thermique, comportant une couronne dentée 2 de démarrage fixée sur une partie périphérique, schématisée en 3, d'un support 1.

De façon classique, le support 1 est monté sur un arbre 4 d'axe 5 de sortie d'un moteur thermique (non représenté). Les dents 6 du rotor 7 du démarreur (non représenté) sont adaptées à venir en prise avec les dents 8 de la couronne 2 lors d'une opération de démarrage pour entraîner en rotation la couronne 2 et le support 1 pour démarrer un moteur thermique (non représenté).

On va décrire ci-dessous le volant selon l'invention comprenant une couronne dentée 2 de démarreur liée, par un système de liaison 9, sur la partie périphérique 3 d'un support lié à l'arbre de sortie 5 d'un moteur thermique, dans le cas simple le plus courant dans lequel la couronne de démarreur 2 est fixée directement sur la partie périphérique 3 du support 1.

Bien entendu, le système de liaison 9, conformément à l'invention, peut être monté et mis en oeuvre de façon identique sur un support quelconque lié à l'arbre de sortie 4 d'un moteur thermique.

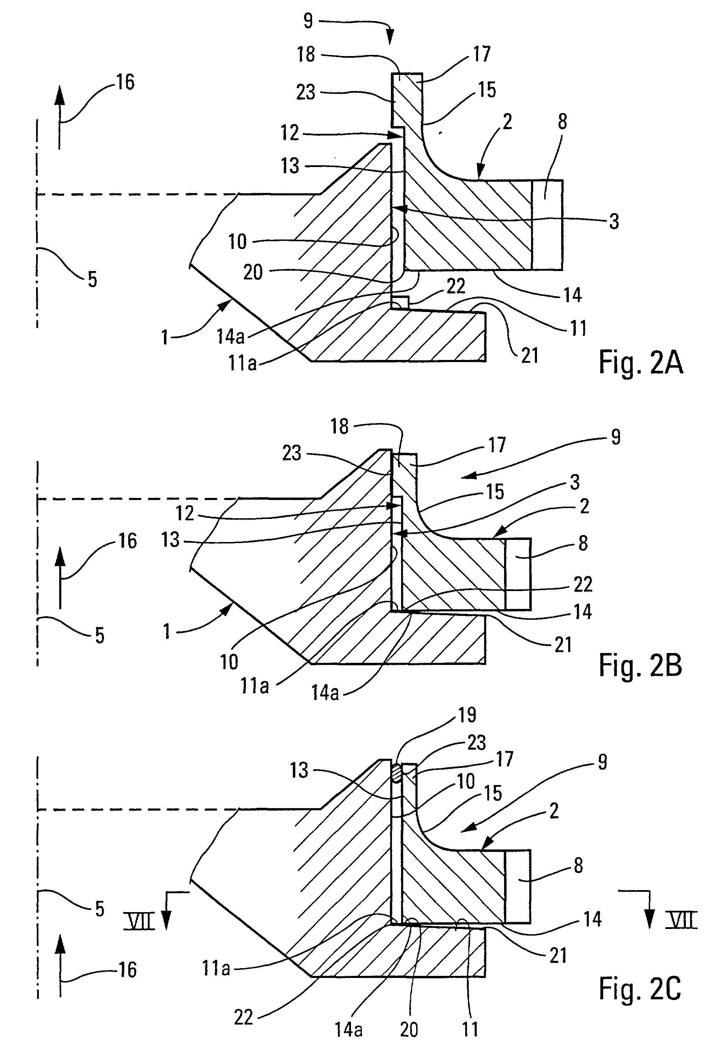

Comme schématisé aux figures 2A à 6, le volant suivant l'invention comprend un support et une couronne fixée au support selon un système de liaison 9, et est caractérisé en ce que :
- la partie périphérique 3 du support 1 adaptée à recevoir la couronne 2 a en coupe radiale, par un plan radial quelconque, une forme correspondant sensiblement à un angle rentrant sensiblement droit, avec une surface périphérique sensiblement cylindrique 10 de fixation de la couronne 2 sur le support 1 et une surface radiale 11 de contact entre la couronne 2 et le support 1;
- la partie périphérique intérieure 12 de la couronne 2 adaptée à être fixée sur le support 1 a en coupe radiale une forme complémentaire de la forme de la partie périphérique 3 du support 1, correspondant sensiblement à un angle saillant sensiblement droit, avec une surface périphérique intérieure sensiblement cylindrique 13 complémentaire de la surface périphérique 10 et adaptée à être sur au moins une partie de sa superficie fixée sur la surface périphérique 10 du support 1, et une surface radiale 14 complémentaire de la surface radiale 11 et adaptée à être au moins partiellement en contact avec la surface radiale 11 du support 1;
- la surface périphérique complémentaire 13 de la couronne 2 est fixée sur au moins une partie de sa superficie sur la surface périphérique 10 du support 1, au moins dans la région de ladite surface périphérique complémentaire 13 la plus éloignée de la surface radiale 14 de la couronne 2, d'une manière telle que la couronne 2 peut se déformer légèrement radialement vers l'arbre 4 lors d'un démarrage, et que la surface radiale complémentaire 14 de la couronne 2 peut glisser légèrement le long de la surface radiale 11 du support 1.

Dans le mode de réalisation représenté aux figures 2A, 2B et 2C, la couronne 2 comporte une partie annulaire 15 s'étendant axialement au-delà des dents 8 dans le sens axial 16 s'éloignant de la surface radiale complémentaire 14 et dirigée vers le rotor 7, et la couronne 2 est fixée au support 1 à l'extrémité axiale 17 de cette partie annulaire 15.

Dans le mode de réalisation des figures 2A et 2B, l'extrémité axiale 17 comporte une collerette intérieure 18, en saillie radialement vers l'intérieur vers l'axe 5, la collerette intérieure 18 étant limitée intérieurement par une surface périphérique intérieure cylindrique 23 adaptée à être en contact avec le surface périphérique 10 du support 1 et à être fixée sur celle-ci.

Ce mode de réalisation est de préférence fixé au support 1 par frettage, comme représenté à la figure 2B.

Dans le mode de réalisation représenté à la figure 2C, la partie annulaire 15 est fixée par la surface périphérique 23 de son extrémité axiale 17 à la surface périphérique 10 du support 1 par un cordon de soudure schématisé en 19 à la figure.

En dehors des régions de fixation de la couronne 2 sur le support 1, le reste de la surface sensiblement cylindrique complémentaire 13 est conformé de manière à être écarté radialement de la surface cylindrique 10 du support 1 pour donner la flexibilité radiale requise à la couronne 2.

Dans ce mode de réalisation des figures 2A à 2C, la région 14a de la surface radiale complémentaire 14 de la couronne 2 adaptée à être en contact avec la surface radiale 11 du support 1 s'étend radialement sur une faible hauteur à partir de l'arête circulaire 20 constituant aux figures le coin correspondant, c'est-à-dire le coin inférieur droit, de la coupe axiale de la couronne.

De façon correspondante, la région 11a de la surface radiale 11 du support 1 adaptée à être en contact avec la région 14a de la couronne s'étend radialement sur une faible hauteur à partir de la surface périphérique 10 de façon à être en contact glissant avec la région 14a de la surface radiale complémentaire 14 de la couronne 2 de faible dimension radiale. Dans ces conditions, la surface radiale 11 se prolonge par une surface conique très évasée 21 de même axe 5 qui facilite la mise en place de la couronne 2 sur le support 1.

On a schématisé en 22 à la figure 2A, avec une dimension axiale très exagérée pour la clarté de la figure, un mince revêtement, fixé à la surface radiale 11 du support 1, d'un matériau facilitant le contact glissant entre la surface radiale 11 et la surface radiale complémentaire 14, par exemple d'un élastomère ou d'un plastomère.

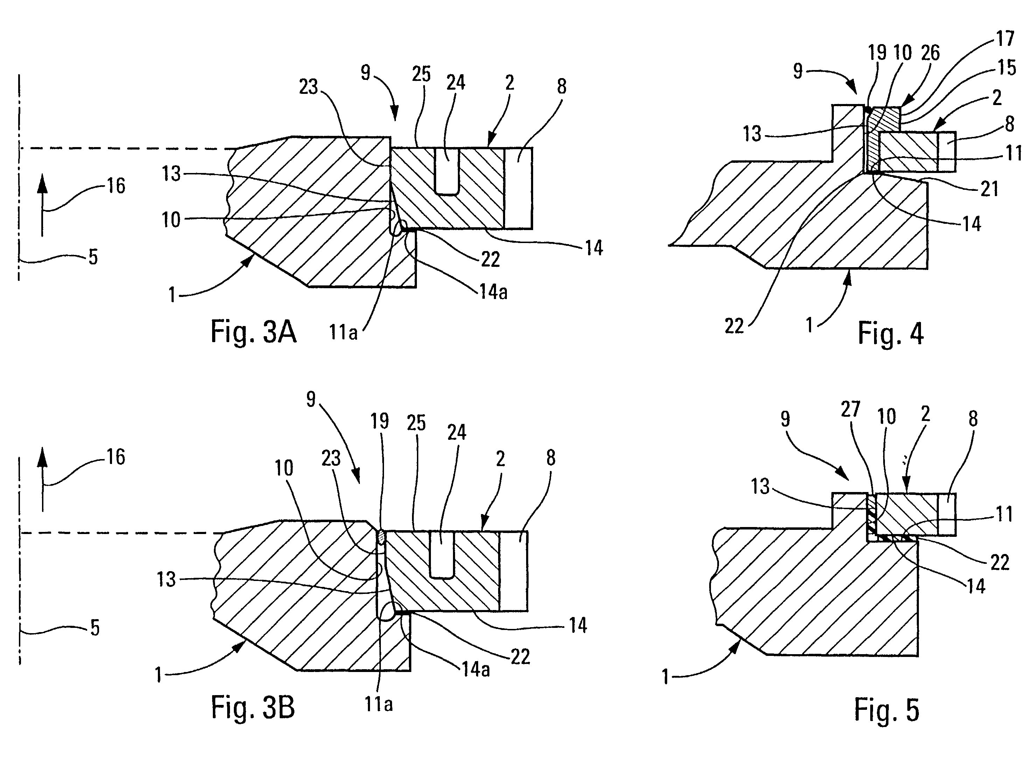

Dans le mode de réalisation représenté aux figures 3A et 3B, la surface périphérique intérieure complémentaire 13 de la couronne 2 a une dimension axiale correspondant de préférence sensiblement à celle des dents 8. La couronne 2 est fixée sur le support 1 dans la région 23 de la surface périphérique complémentaire 13 la plus éloignée de la surface radiale complémentaire 14, par exemple par soudure ou par frettage. La couronne 2 comporte en outre une gorge annulaire 24 partant de la surface 25 limitant axialement la couronne 2 dans le sens axial 16 vers le rotor 7, à l'opposé de la surface radiale complémentaire 14, et s'étendant axialement vers ladite surface radiale complémentaire 14 sur une partie de la dimension axiale de la couronne 2.

La région 23 représentée à la figure 3A a une dimension axiale suffisante pour permettre la fixation par frettage de la couronne 2 sur la surface 10 du support 1.

Dans l'exemple de la figure 3B, la couronne 2 est fixée au support 1 par un cordon de soudure 19 à l'extrémité axiale de la région 23 opposée à la surface radiale complémentaire 14.

Dans ce mode de réalisation des figures 3A et 3B, la région de contact 11a de la surface radiale 11 du support 1 est disposée radialement à l'extérieur de la surface périphérique 10, et s'étend sur une faible hauteur radiale. Elle porte un revêtement 22 en élastomère ou plastomère de faible épaisseur permettant le contact glissant avec la région 14a de la surface radiale complémentaire 14 de la couronne 2.

Dans ce mode de réalisation, le support 1 ne s'étend pas radialement vers l'extérieur au-delà de la région 11a, ce qui laisse à la couronne toute latitude de déformation lors d'une opération de démarrage.

Dans le mode de réalisation schématisé à la figure 4, le volant comporte un élément métallique annulaire intermédiaire 26 sur lequel est fixée la couronne 2, d'une manière classique quelconque, par exemple par vissage, frettage ou soudage.

L'élément annulaire intermédiaire 26 comporte la surface périphérique intérieure complémentaire 13 et la surface radiale complémentaire 14. Cet élément annulaire intermédiaire 26 est fixé sur le support 1 à son extrémité axiale éloignée de la surface radiale complémentaire 14 comme si l'élément intermédiaire 26 faisait partie intégrante de la couronne 2. Il est fixé d'une manière connue quelconque au support 1.

Dans l'exemple représenté, l'élément intermédiaire 26 a une longueur axiale supérieure à celle de la couronne 2. Il est fixé au support 1 par un cordon de soudure 19 ménagé à son extrémité axiale 17 éloignée de la surface radiale complémentaire 14.

Dans le mode de réalisation schématisé à la figure 5, le support 1 comporte une bague annulaire 27 en un matériau déformable, par exemple en élastomère ou plastomère, s'étendant axialement le long de la surface périphérique complémentaire 13 de la couronne 2. La bague 27 est collée ou adhérisée d'une manière connue quelconque, d'un côté sur la surface périphérique 10 du volant 1 et de l'autre côté sur la surface périphérique 13 de la couronne 2.

Cette bague annulaire 27 a nécessairement une certaine épaisseur suffisante pour communiquer à la couronne 2 une liberté de déformation par rapport au support 1 permettant d'obtenir les effets recherchés par la présente invention.

En outre, un revêtement 22 en élastomère ou plastomère est fixé, par exemple, sur la surface radiale 11 pour permettre un contact glissant avec la surface radiale complémentaire 14 de la couronne 2.

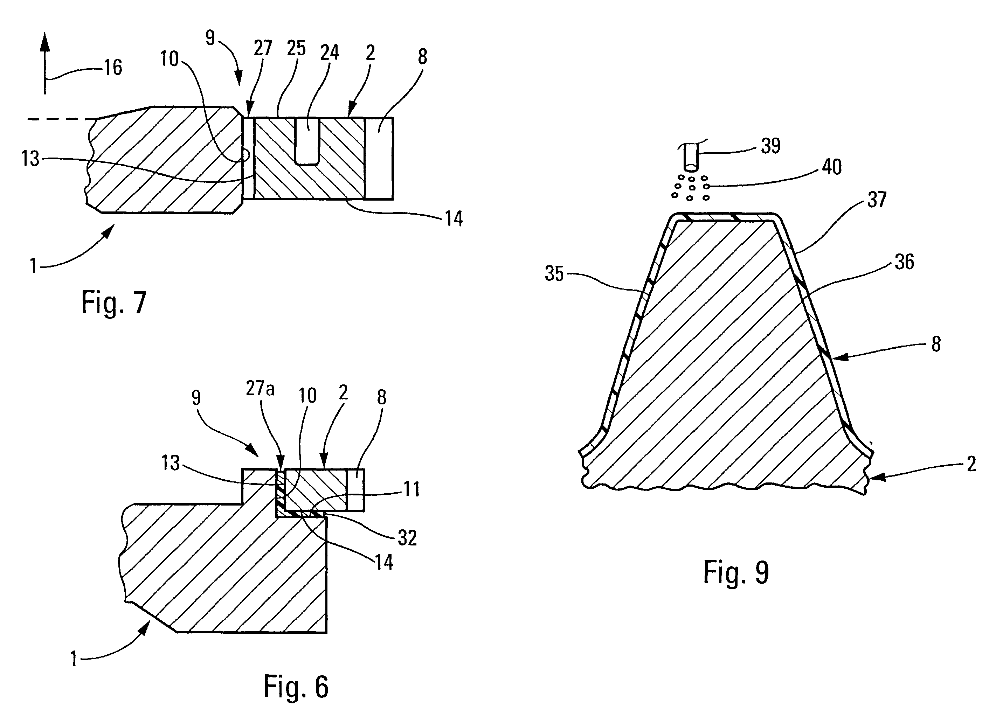

Dans le mode de réalisation représenté à la figure 6, la bague annulaire 27a a en coupe radiale une section L et comporte une paroi radiale 32 adhérisée d'un côté sur la surface radiale 11 du support 1 et de l'autre côté sur la surface radiale complémentaire 14 de la couronne 2.

La bague 27a peut ainsi être réalisée facilement par injection sous pression de l'élastomère dans l'espace en L ménagé entre le support 1 et la couronne 2.

Dans le mode de réalisation représenté à la figure 7, la partie périphérique 3 du support 1 comprend uniquement la surface cylindrique 10, sans aucune paroi radiale.

On sait que la paroi radiale classique 11 sert à la fois à une mise en place précise de la couronne 2 sur le support 1 lors de la fabrication du volant, et à encaisser une partie de la force axiale transmise par le rotor 7 du démarreur à la couronne 2 lors d'une opération de démarrage.

En l'absence de la paroi classique 11, la couronne 2 doit être fixée sur le support par des moyens adaptés à encaisser la totalité de ladite force axiale.

Dans l'exemple représenté à la figure 7, une bague annulaire 27 en matériau viscoélastique est adhérisée d'un côté sur la surface périphérique 10 du support 1, de l'autre côté sur la surface périphérique 13 de la couronne 2.

Dans cet exemple, la couronne 2 comporte la gorge annulaire 24 décrite ci-dessus.

La bague annulaire 27 pourrait également être en métal dans le cas du mode de réalisation décrit ci-dessous en référence à le figure 8.

La couronne 2 est fixée au support 1 de préférence uniquement selon des secteurs périphériques, schématisés en 28 à la figure 1, régulièrement répartis autour de l'axe 5 du support 1 en laissant libres les secteurs 29 diamétralement opposés correspondant aux zones de compression d'un moteur thermique équipé du volant considéré, et/ou les secteurs 30 diamétralement opposés correspondant aux zones de détente dudit moteur, les secteurs 29 et 30 étant facilement repérés par rapport au point mort haut qui est de façon classique repéré sur tout volant. Ceci s'entend tout spécialement dans les cas de fixation par soudure (voir figure 1) ou par frettage (voir figure 6).

Ceci permet de communiquer à la couronne, dans ces secteurs 29 de compression et 30 de détente, d'une flexibilité supplémentaire augmentant l'amortissement de l'effet de choc et de la pointe de pression subis par les dents 8 de la couronne 2 au niveau de ces secteurs 29 de compression et 30 de détente.

On a représenté dans l'exemple de la figure 1, pour un moteur à quatre cylindres, quatre secteurs 28 de fixation situés aux extrémités de deux axes perpendiculaires, chaque secteur 29, 30 de compression ou de détente étant situé entre deux secteurs 28 de fixation adjacents. On pourrait prévoir un autre nombre de secteurs 28, par exemple six secteurs 28 pour un moteur à trois cylindres ou à six cylindres en V.

Dans le mode de réalisation schématisé à la figure 8, la surface périphérique du support 1 présente un évidement 31 au droit de chacun des deux secteurs 29 correspondant aux deux zones de compression et/ou de chacun des deux secteurs 30 correspondant aux deux zones de détente.

Les évidements 31 sont réalisés d'une manière connue quelconque, et sont par exemple des méplats réalisés lors du moulage ou par fraisage, ou des gorges de forme périphérique quelconque.

Ainsi, la couronne 2, qui n'est pas bloquée sur le support au niveau des évidements 31, présente une flexibilité radiale supplémentaire qui diminue les contraintes et l'usure subies habituellement par la couronne dans les secteurs 29 et 30 correspondant aux zones de compression et de détente.

On a ainsi décrit différents volants comprenant une couronne 2 fixée sur un support 1. Certains de ces volants comprennent des moyens de fixation aussi éloignés que possible de la surface radiale complémentaire 14 de la couronne donnant à la couronne 2 par rapport au support 1 une flexibilité radiale facilitée par un contact glissant sur une hauteur radiale en général faible entre la surface radiale complémentaire 14 de la couronne 2 et la surface radiale 11 du support 1.

Tous les modes de réalisation décrits assurent une flexibilité de la couronne dans le sens radial vers l'axe 5, sans exclure une flexibilité dans d'autres directions.

Bien entendu, pour chaque volant décrit, la forme de la coupe radiale de la couronne est étudiée de façon à permettre à ladite couronne de supporter les contraintes nées du mode de fixation considéré. De toute manière, ces contraintes s'exercent dans une zone de contrainte non trempée puisque la zone trempée qui comprend les dents descend seulement vers l'intérieur d'environ 1 millimètre en-dessous des dents.

Dans tout ce qui précède le volant selon la présente invention comprend une liaison de la couronne sur le support qui concerne au moins partiellement la surface périphérique extérieure 10 du support 1 et la surface périphérique intérieure 13 de la couronne 2.

On a vu dans les exemples décrits ci-dessus que le mot partiellement doit être interprété géométriquempent et signifie que la surface de liaison s'étend le long d'une partie ou sur une partie au moins, dans la direction périphérique comme dans la direction axiale, de la superficie des surfaces périphériques 10 et 13.

Les systèmes décrits ci-dessus de liaison et d'amortissement des contraintes mécaniques supportées par les dents 8 de la couronne dentée 2 permettent effectivement d'atteindre l'objectif de 200.000 à 300.000 démarrages que s'était fixé à l'origine la Demanderesse, le cas échéant beaucoup plus.

La Demanderesse a poursuivi ses recherches et ses efforts pour améliorer cet objectif de résistance de la couronne dentée tout en diminuant le niveau des bruits engendrés par une opération de démarrage.

C'est ainsi que la Demanderesse a associé à l'un des systèmes de liaison et d'amortissement ci-dessus une lubrification des dents de la couronne dentée par un film d'huile ou de graisse déposé d'une manière connue quelconque, par exemple par pulvérisation, par projection d'un jet sous pression ou par simple contact des dents avec un palpeur enduit d'huile ou de graisse d'une qualité appropriée connue quelconque. Des essais systématiques d'une telle combinaison d'un système de liaison et d'une lubrification ont permis à une couronne dentée d'atteindre plus de 800.000 démarrages sans rupture d'une dent ou de la couronne.

En variante, et comme schématisé à la figure 9, la Demanderesse a déposé, au moins sur les deux faces axiales 35, 36 de chaque dent 8 (qui s'étendent selon l'axe 5 du volant 1) un revêtement auto-lubrifiant 37 dont l'épaisseur a été très exagérée pour la clarté de la figure.

Ce revêtement 37 peut évidemment également recouvrir la surface 38 entre deux dents 8 adjacentes (voir figure 1) ou être limité aux faces 35 et 36.

Un tel revêtement est connu en lui-même. Il peut être par exemple réalisé au moyen d'un vernis de glissement du type SDA ® commercialisé par la société TECHNIQUES SURFACES ® apportant à la surface des pièces traitées des lubrifiants solides, tel que du bisulfure de molybdène, dans une matrice thermodurcissable à base de résines époxy, phénolique, silicone, etc..., seules ou en mélange. Un tel revêtement peut être réalisé par exemple par projection, par trempage ou par centrifugation sur des surfaces ayant subi au préalable un traitement de surface approprié.

Un tel revêtement peut en variante être par exemple le résultat d'un traitement de surface connu sous le nom commercial SULF BT ® de la même société TECHNIQUES SURFACES TS ®, réalisé par électrolyse anodique dans un bain de sels fondus à base de thiocyanates alcalins. Ce traitement réalise sur les surfaces traitées une micro-couche, ayant une épaisseur de 7 à 8 microns environ, de sulfure de fer totalement imbriquée dans le métal de base.

Un tel revêtement auto-lubrifiant peut évidemment être associé à une lubrification par une huile ou une graisse appropriée mise en place par des moyens de lubrification connus quelconques schématisés en 39 à la figure 9, par exemple un ajutage de pulvérisation de goutelettes d'huile 40.

Bien entendu, la présente invention n'est pas limitée aux modes de réalisation que l'on vient de décrire, et on peut apporter à ceux-ci de nombreux changements et modifications sans sortir du domaine de l'invention telle que définie par les revendications.

On peut ainsi prévoir d'autres moyens connus pour faciliter le contact glissant entre les régions 11a et 14a à la place du revêtement 22. On pourrait ainsi polir ces deux régions, ou déposer un matériau antifriction métallique ou plastique. On pourrait aussi renoncer à de tels moyens.

Au lieu d'avoir une surface périphérique 10 du support 1 et une surface périphérique 13 de la couronne écartée sur une partie de sa superficie de la surface 10, on pourrait à l'inverse avoir une surface périphérique 13 cylindrique sur la couronne 2 et une surface périphérique 10 du support 1 conformée de manière à être écartée radialement de la surface 13 sur une partie de sa superficie.

On peut enfin combiner entre eux d'une manière quelconque les divers modes de réalisation décrits ci-dessus.

## Revendications

1. Volant de moteur thermique lié à l'arbre de sortie (4) du moteur et comportant un support (1) qui comprend une surface périphérique (10) sensiblement cylindrique, et une couronne dentée de démarrage (2) qui est fixée à la surface périphérique (10) du support (1), **caractérisé en ce que** la couronne (2) est fixée directement à la surface périphérique (10), par une partie d'une surface périphérique interne complémentaire (13) sensiblement cylindrique qui est soit celle de la couronne (2), soit celle d'un élément intermédiaire (26) métallique sur lequel est fixée la couronne (2), le reste de la surface périphérique interne complémentaire (13) étant conformé de manière à être écarté radialement de la surface périphérique (10) pour donner une flexibilité radiale à la couronne (2) d'une manière telle qu'elle peut se déformer légèrement radialement vers l'arbre (4) auquel est fixé le support (1) de façon à diminuer les contraintes maximales s'exerçant sur la couronne (2) pendant une opération de démarrage.

2. Volant selon la revendication 1, **caractérisée en ce que** la fixation de la surface périphérique interne complémentaire (13) à la surface périphérique (10) est réalisée par soudage ou par frettage.

3. Volant selon la revendication 1 ou 2, **caractérisé en ce que** le support (1) comporte une surface radiale (11) qui est perpendiculaire à l'axe (5) du volant et sensiblement perpendiculaire à la surface périphérique (10), et **en ce que**, soit la couronne (2), soit l'élément intermédiaire (26) métallique, comporte une surface radiale complémentaire (14) qui est perpendiculaire à l'axe (5) du volant et sensiblement perpendiculaire à la surface périphérique complémentaire (13) et qui est adaptée à être en contact sur au moins une partie de sa superficie avec la surface radiale (11) et à glisser légèrement le long de cette surface (11).

4. Volant selon la revendication 3, **caractérisé en ce que** la partie de la surface périphérique interne complémentaire (13) qui est fixée à la surface périphérique (10) est la région (23) qui est éloignée de la surface radiale complémentaire (14).

5. Volant selon la revendication 4, **caractérisé en ce que** la couronne (2) ou, le cas échéant, l'élément intermédiaire (26) métallique, comporte une partie annulaire (15) qui s'étend axialement au-delà des dents (8) de la couronne dans le sens axial (16) de l'éloignement de la surface radiale complémentaire (14), la région (23) éloignée de la surface radiale complémentaire (14) étant la surface périphérique intérieure de l'extrémité axiale (17) de cette partie annulaire (15).

6. Volant selon l'une des revendications 3 à 5, **caractérisé en ce qu'**un matériau favorisant le glissement de la surface radiale complémentaire (14) sur la surface radiale (11), par exemple un élastomère ou un plastomère, est intercalé entre ces deux surfaces (11,14), de préférence sous la forme d'un revêtement (22) fixé sur la surface radiale (11).

7. Volant selon l'une des revendications 1 à 6, **caractérisé en ce que** la couronne (2) comporte une gorge annulaire (24) qui part de la surface (25) limitant axialement la couronne (2) dans le sens axial (16) vers le rotor (7) d'un démarreur coopérant avec la couronne (2) et qui s'étend axialement dans le sens opposé audit sens (16) sur une partie de la dimension axiale de la couronne (2).

8. Volant selon l'une des revendications 1 à 7, caractérisé la couronne (2) est fixée au support (1) uniquement selon des secteurs périphériques (28) de fixation régulièrement répartis autour de l'axe (5) du support (1) en laissant libres les secteurs (29) correspondants aux zones de compression et/ou les secteurs (30) correspondants aux zones de détente.

9. Volant selon l'une des revendications 1 à 8, **caractérisé en ce que** la surface périphérique (10) présente un évidemment au droit de chacun des secteurs (29) correspondants aux zones de compression et/ou de chacun des secteurs (30) correspondants aux zones de détente.

10. Volant selon l'une des revendications 1 à 9, **caractérisé en ce que** chaque dent (8) de la couronne (2) comporte un revêtement autolubrifiant (37) sur leurs faces axiales (35,36) qui s'étendent selon l'axe (5) du volant (1).

11. Volant selon l'une des revendications 1 à 10, **caractérisé en ce qu'**il est associé à des moyens (39) de lubrification des dents (8) de la couronne (2)

## Patentansprüche

1. Schwungrad eines Verbrennungsmotors, das mit der Abtriebswelle (4) des Motors verbunden ist und einen Träger (1), der eine im wesentlichen zylinderförmige Umfangsoberfläche (10) umfasst, und einen Anlasszahnkranz (2) aufweist, der an der Umfangsoberfläche (10) des Trägers (1) befestigt ist, **dadurch gekennzeichnet, dass** der Kranz (2) an der Umfangsoberfläche (10) durch einen Teil einer inneren, komplementären, im wesentlichen zylinderförmigen Umfangsoberfläche (13) direkt befestigt ist, die entweder die des Kranzes (2) oder die eines metallischen Zwischenelements (26) ist, auf dem der Kranz (2) befestigt ist, wobei der Rest der inneren komplementären Umfangsoberfläche (13) angepasst ist, sodass er von der Umfangsoberfläche (10) radial getrennt ist, um dem Kranz (2) eine radiale Flexibilität zu geben, sodass er sich leicht radial in Richtung zu der Welle (4) verformen kann, an der der Träger (1) derart befestigt ist, um die maximalen Belastungen zu verringern, die sich auf dem Kranz (2) während eines Anlassvorgangs ausüben.

2. Schwungrad gemäß Anspruch 1, **dadurch gekennzeichnet, dass** die Befestigung der inneren komplementären Umfangsoberfläche (13) an der Umfangsoberfläche (10) durch Schweißen oder durch Aufschrumpfen (Frettage) ausgeführt wird.

3. Schwungrad gemäß Anspruch 1 oder 2, **dadurch gekennzeichnet, dass** der Träger (1) eine radiale Oberfläche (11) aufweist, die zu der Achse (5) des Schwungrads senkrecht ist und zu der Umfangsoberfläche (10) im wesentlichen senkrecht ist, und dadurch, dass entweder der Kranz (2) oder das metallische Zwischenelement (26) eine radiale komplementäre Oberfläche (14) aufweist, die zu der Achse (5) des Schwungrads senkrecht ist und zu der komplementären Umfangsoberfläche (13) im wesentlichen senkrecht ist und die angepasst ist, auf wenigstens einem Teil ihrer Fläche mit der radialen Oberfläche (11) in Kontakt zu sein und um leicht längs dieser Oberfläche (11) zu gleiten.

4. Schwungrad gemäß Anspruch 3, **dadurch gekennzeichnet, dass** der Teil der inneren komplementären Umfangsoberfläche (13), der an der Umfangsoberfläche (10) befestigt ist, der Bereich (23) ist, der von der radialen komplementären Oberfläche (14) entfernt ist.

5. Schwungrad gemäß Anspruch 4, **dadurch gekennzeichnet, dass** der Kranz (2) oder gegebenenfalls das metallische Zwischenelement (26) einen ringförmigen Teil (15) aufweist, der sich axial jenseits der Zähne (8) des Kranzes in die axiale Richtung (16) der Entfernung der radialen komplementären Oberfläche (14) erstreckt, wobei der Bereich (23), der von der radialen komplementären Oberfläche (14) entfernt ist, die innere Umfangsoberfläche des axialen Endes (17) dieses ringförmigen Teils (15) ist.

6. Schwungrad gemäß einem der Ansprüche 3 bis 5, **dadurch gekennzeichnet, dass** ein Material, das das Gleiten der radialen komplementären Oberfläche (14) auf der radialen Oberfläche (11) fördert, zum Beispiel ein Elastomer oder ein Plastomer, zwischen diese zwei Oberflächen (11, 14), vorzugsweise in Form einer Auskleidung (22) zwischengelegt ist, die an der radialen Oberfläche (11) befestigt ist.

7. Schwungrad gemäß einem der Ansprüche 1 bis 6, **dadurch gekennzeichnet, dass** der Kranz (2) eine ringförmige Vertiefung (24) aufweist, die von der Oberfläche (25), die den Kranz (2) axial einschränkt, in die axiale Richtung (16) zu dem Rotor (7) eines Anlassers ausgeht, der mit dem Kranz (2) zusammenarbeitet, und die sich in die zur Richtung (16) entgegengesetzten Richtung auf einem Teil der axialen Abmessung des Kranzes (2) axial erstreckt.

8. Schwungrad gemäß einem der Ansprüche 1 bis 7, **dadurch gekennzeichnet, dass** der Kranz (2) am Träger (1) nur gemäß Umfangssektoren (28) mit gleichmäßiger Befestigung befestigt ist, die um die Achse (5) des Trägers (1) unter Freilassen der Sektoren (29), die den Druckzonen entsprechen und/oder der Sektoren (30) verteilt sind, die den Entspannungszonen entsprechen.

9. Schwungrad gemäß einem der Ansprüche 1 bis 8, **dadurch gekennzeichnet, dass** die Umfangsoberfläche (10) eine Aussparung rechts jedes der Sektoren (29), die den Druckzonen entsprechen, und/oder jedes der Sektoren (30) aufweist, die den Entspannungszonen entsprechen.

10. Schwungrad gemäß einem der Ansprüche 1 bis 9, **dadurch gekennzeichnet, dass** jeder Zahn (8) des Kranzes (2) eine selbstschmierende Auskleidung (37) auf seinen axialen Seiten (35, 36) aufweist, die sich entlang der Achse (5) des Schwungrads (1) erstrecken.

11. Schwungrad gemäß einem der Ansprüche 1 bis 10, **dadurch gekennzeichnet, dass** es mit Mitteln (39) zur Schmierung der Zähne (8) des Kranzes (2) assoziiert ist.

## Claims

1. A heat engine flywheel connected to the engine output shaft (4) and comprising a support (1) comprising a substantially cylindrical peripheral surface (10), and a toothed starter ring (2) fixed to the peripheral surface (10) of the support (1), **characterised in that** the ring (2) is fixed directly to the peripheral surface (10) by a part of a substantially cylindrical complementary internal peripheral surface (13) which is either that of the ring (2) or that of a metal intermediate element (26) on which the ring (2) is fixed, the remainder of the complementary internal peripheral surface (13) being so shaped as to be radially spaced from the peripheral surface (10) in order to give a radial flexibility to the ring (2) so that it can be deformed slightly radially towards the shaft (4) to which the support (1) is fixed so as to reduce the maximum stresses acting on the ring (2) during a starting operation.

2. A flywheel according to claim 1, **characterised in that** fixing of the complementary internal peripheral surface (13) to the peripheral surface (10) is effected by welding or hooping.

3. A flywheel according to claim 1 or 2, **characterised in that** the support (1) comprises a radial surface (11) which is perpendicular to the axis (5) of the flywheel and substantially perpendicular to the peripheral surface (10) and **in that** either the ring (2) or the metal intermediate element (26) comprises a complementary radial surface (14) which is perpendicular to the axis (5) of the flywheel and substantially perpendicular to the complementary peripheral surface (13) and which is adapted to be in contact over at least a part of the superficies with the radial surface (11) and to slide slightly along the said surface (11).

4. A flywheel according to claim 3, **characterised in that** the part of the complementary internal peripheral surface (13) which is fixed to the peripheral surface (11) is the region (23) which is distant from the complementary radial surface (14).

5. A flywheel according to claim 4, **characterised in that** the ring (2) or where applicable the metal intermediate element (26) comprises an annular part (15) which extends axially beyond the teeth (8) of the ring in the axial direction (16) of the distance of the complementary radial surface (14), the region (23) distant from the complementary radial surface (14) being the inner peripheral surface of the axial end (17) of said annular part (15).

6. A flywheel according to any one of claims 3 to 5, **characterised in that** a material promoting the sliding of the complementary radial surface (14) on the radial surface (11), for example an elastomer or a plastomer, is interposed between said two surfaces (11, 14), preferably in the form of a covering (22) fixed on the radial surface (11).

7. A flywheel according to any one of claims 1 to 6, **characterised in that** the ring (2) comprises an annular groove (24) which starts from the surface (25) axially defining the ring (2) in the axial direction (16) towards the rotor (7) of a starter cooperating with the ring (2) and which extends axially in the opposite direction to the direction (16) over a part of the axial dimension of the ring (2).

8. A flywheel according to any one of claims 1 to 7, **characterised in that** the ring (2) is fixed to the support (1) solely along peripheral fixing sectors (28) distributed uniformly around the axis (5) of the support (1) while leaving free the sectors (29) corresponding to the compression zones and/or the sectors (30) corresponding to the relaxation zones.

9. A flywheel according to any one of claims 1 to 8, **characterised in that** the peripheral surface (10) has a recess at each of the sectors (29) corresponding to the compression zones and/or at each of the sectors (30) corresponding to the relaxation zones.

10. A flywheel according to any one of claims 1 to 9, **characterised in that** each tooth (8) of the ring (2) has a self-lubricating covering (37) on their axial surfaces (35, 36) which extend along the axis (5) of the flywheel.

11. A flywheel according to any one of claims 1 to 10, **characterised in that** it is associated with means (39) of lubricating the teeth (8) of the ring (2).
